# EUROPÄISCHE PATENTANMELDUNG

(11) **EP 3 916 266 A1**
(43) Veröffentlichungstag der Anmeldung: **01.12.2021**
(21) Anmeldenummer: 21167301.7
(22) Anmeldetag: 08.04.2021
(51) Int. Cl.: F16F 1/38, B29C 45/00, B29C 45/14, B29C 70/46, B29C 70/86, B29K 21/00, B29K 305/00, B29K 705/00, B29L 31/04

(54) **VERFAHREN ZUR HERSTELLUNG MEHRERER ELASTOMERER BUCHSENLAGER MIT ZWISCHENHÜLSE**

(30) Priorität: 26.05.2020 DE 102020114005
(71) Anmelder: VORWERK AUTOTEC GmbH & Co. KG, 42287 Wuppertal (DE)
(72) Erfinder: Cöllen, Peter, 42119 Wuppertal (DE); Dr.-Ing. Beneker, Wilfried, 42799 Leichlingen (DE)
(74) Vertreter: Lippert Stachow Patentanwälte Rechtsanwälte

(57) **Zusammenfassung**

Die Erfindung betrifft ein Verfahren zur Herstellung mehrerer elastomerer Buchsenlager (8) für ein KFZ jeweils umfassend zumindest eine Zwischenhülse (3). Die Aufgabe des erfindungsgemäßen Verfahrens besteht darin die Herstellung solcher elastomerer Buchsenlager (8) umweltverträglicher und kostengünstiger zu gestalten. Diese Aufgabe wird durch eine Zwischenhülse (3) gelöst, welche eine haftvermittlerfreie Verbindung der Zwischenhülse (3) zum Elastomerkörper mittels einer Formverbindung ermöglicht.

Das Verfahren zur Herstellung mehrerer elastomerer Buchsenlager (8) umfasst die Schritte:

- Bereitstellen einer Mehrzahl von Innenkernen (1);

- Bereitstellen einer Mehrzahl von Außenhülsen (4);

- Bereitstellen eines Zwischenhülsenvorformbandes (6) mit den Schritten:

o Bereitstellen eines Metallbands

o Abschnittsweises Einführen des Metallbands in eine Schneid-Reck-Vorrichtung;

o Durchführen eines Schneid-Reck-Schrittes im Bereich des eingeführten Abschnitts, welcher die Erzeugung zumindest eines transversalen Schnittes in das Metallband und nach erfolgtem Schnitt das Recken des Metallbands durch Walzen des eingeführten Abschnitts zur Vergrößerung eines Abstandes von sich gegenüberliegender Schnittkanten des Schnitts zur Erzeugung einer Lücke (5) umfasst;

o Durchführen eines Förderschrittes, welcher das Metallband in Longitudinalrichtung zu einem nachfolgenden Abschnitt des Metallbands fördert;

o Wiederholen des Schneid-Reck-Schrittes und des Förderschrittes, bis jeder Abschnitt des Metallbands entlang seiner gesamten Longitudinalerstreckung bearbeitet ist;

- Ablängen mehrerer Zwischenhülsenvorformen mit vorgegebener Longitudinalerstreckung vom Zwischenhülsenvorformband (6);

- Umformen der Zwischenhülsenvorformen um eine Achse parallel zu deren Transversalerstreckung zur Erzeugung von mehreren Zwischenhülsen (3);

- Bereitstellen zumindest einer Spritzgießform zum Umspritzen zumindest einer Zwischenhülse (3), eines Innenkerns (1) und einer Außenhülse (4) zur Erzeugung jeweils eines elastomeren Buchsenlagers (8);

- Fertigen mehrerer elastomerer Buchsenlager (8) jeweils mit den Schritten:

o Einsetzen eines Innenkerns (1) und einer Außenhülse (4) in die Spritzgießform;

o Einsetzen zumindest einer Zwischenhülse (3) in die Spritzgießform;

o Umspritzen der in der Spritzgießform befindlichen Teile mit einem Elastomer zur Erzeugung eines elastomeren Buchsenlagers (8), derart, dass das Elastomer zwischen beabstandeten Schnittkanten der Schnitte angeordnet ist zur Erzeugung einer Formschlussverbindung zwischen Elastomerkörper (2) und Zwischenhülse (3).

## Beschreibung

Die vorliegende Erfindung betrifft ein Verfahren zur Herstellung mehrerer elastomerer Buchsenlager zur Verwendung in einem KFZ umfassend jeweils einen Innenkern, einen den Innenkern radial umschließenden Elastomerkörper, zumindest eine als Teil des Elastomerkörpers angeordnete Zwischenhülse und eine den Elastomerkörper umgreifende Außenhülse.

Elastomere Buchsenlager dieser Art werden insbesondere in der Automobilindustrie verwendet um beispielsweise Teile des Fahrwerks oder Radaufhängungen gedämpft zu lagern und somit Vibrationen durch das elastomere Material von der Fahrgastzelle fern zu halten. Ein solches Buchsenlager umfasst einen Innenkern, einen zum Innenkern radial außen angeordneten Elastomerkörper, mindestens eine als Teil des Elastomerkörpers angeordneten Zwischenhülse sowie eine den Elastomerkörper umgreifende Außenhülse. In einer Anwendung kann ein solches Buchsenlager an der Außenhülse mit dem Fahrgestell verbunden und das zu lagernde Bauteil zumeist über einen in dem Innenkern verlaufenden Bolzen verschraubt werden.

Metallene Zwischenhülsen werden dazu eingesetzt, die Kennung, insbesondere die radiale Steifigkeit des Lagers, zu beeinflussen bzw. einzustellen und werden in der Art einer Zwischenlage im Elastomermaterial als Teil des Elastomerkörper angeordnet und insofern bei der Herstellung des Elastomerkörpers im Elastomermaterial vergossen.

Herkömmliche Zwischenhülsen für elastomere Buchsenlager werden i.d.R. mit einem Haftvermittler behandelt, damit das Elastomermaterial eine stoffschlüssige Verbindung mit der Zwischenhülse eingeht, sodass auch bei torsionaler Belastung ein Lastabtrag der Betriebskräfte im Lager sichergestellt werden kann und das Lager gegen Verdrehen der Bauteile zueinander gesichert ist. Das Aufbringen des Haftvermittlers erfordert mehrere Produktionsschritte, ferner müssen vorgegebene Einwirk- und Aushärtezeiten des Haftvermittlers berücksichtigt werden. Somit entstehen zusätzliche Kosten durch die benötigten Materialien und die aufzuwendende Zeit. Ein weiterer Aspekt ist das allgemeine Bestreben nach umweltschonenderen und nachhaltigeren Produktionsverfahren und demzufolge ist das Vermeiden von chemielastigen Produktionsschritten allgemein erstrebenswert.

Der vorliegenden Erfindung liegt die Aufgabe zugrunde, ein umweltschonenderes Verfahren zur Herstellung von elastomeren Buchsenlagern umfassend jeweils zumindest eine Zwischenhülse anzugeben, wobei die in dem Herstellungsverfahren genutzte Zwischenhülse den Zeitaufwand der Herstellung eines solchen Buchsenlagers minimiert, und dabei einen Formschluss zwischen Elastomer und Zwischenhülse bereitstellt, um Zwischenhülse und Elastomerabschnitte vor einer Verdrehung zueinander zu schützen.

Diese Aufgabe wird verfahrensseitig durch ein erfindungsgemäßes Verfahren zur Herstellung mehrerer elastomerer Buchsenlager mit den Schritten des Hauptanspruchs gelöst.

Dabei umfasst das erfindungsgemäße Verfahren die Schritte:
- Bereitstellen mehrerer Innenkerne;
- Bereitstellen mehrerer Außenhülsen;
- Bereitstellen eines Zwischenhülsenvorformbandes mit den Schritten:
   ∘ Bereitstellen eines, insbesondere nicht mit einem Haftmittel beschichteten, Metallbands;
   ∘ Abschnittsweises Einführen des, insbesondere nicht mit einem Haftmittel beschichteten Metallbands in eine Schneid-Reck-Vorrichtung;
   ∘ Durchführen eines Schneid-Reck-Schrittes im Bereich des eingeführten Abschnitts, welcher die Erzeugung zumindest eines transversalen Schnittes in das Metallband und nach erfolgtem Schnitt das Recken des Metallbands durch Walzen des eingeführten Abschnitts zur Vergrößerung eines Abstandes von sich gegenüberliegenden Schnittkanten eines Schnitts zur Erzeugung einer Lücke umfasst;
   ∘ Durchführen eines Förderschrittes, welcher das Metallband in Longitudinalrichtung zu einem nachfolgenden Abschnitt des Metallbands fördert;
   ∘ Wiederholen des Schneid-Reck-Schrittes und des Förderschrittes, bis jeder Abschnitt des Metallbands entlang seiner gesamten Longitudinalerstreckung bearbeitet wurde zur Erzeugung des Zwischenhülsenvorformbands;
- Ablängen mehrerer Zwischenhülsenvorformen mit vorgegebener Longitudinalerstreckung vom Zwischenhülsenvorformband;
- Umformen der Zwischenhülsenvorformen um eine Achse parallel zu deren Transversalerstreckung zur Erzeugung von Zwischenhülsen;
- Bereitstellen zumindest einer Spritzgießform zum Umspritzen zumindest einer Zwischenhülse, eines Innenkerns und einer Außenhülse zur Erzeugung jeweils eines elastomeren Buchsenlagers;
- Fertigen der jeweiligen elastomeren Buchsenlager mit den Schritten:
   ∘ Einsetzen eines Innenkerns und einer Außenhülse in die Spritzgießform;
   ∘ Einsetzen zumindest einer Zwischenhülse in die Spritzgießform;
   ∘ Umspritzen der in der Spritzgießform befindlichen Teile mit einem Elastomer zur Erzeugung eines elastomeren Buchsenlagers, derart, dass das Elastomer zwischen beabstandeten Schnittkanten der Schnitte des Metallbands angeordnet ist, zur Erzeugung einer Formschlussverbindung zwischen Elastomer und Zwischenhülse.

Die Reihenfolge der angegebenen Schritte des erfindungsgemäßen Verfahrens kann je nach Ausführungsform variieren und insofern in unterschiedlicher Abfolge ablaufen.

Die im Material der Zwischenhülse durch die Vergrößerung der Beabstandung der Schnittkanten erzeugten Lücken sorgen beim Umspritzen mit dem Elastomer für einen Formschluss des eingespritzten Elastomers zu der Zwischenhülse, sodass ein Verdrehen eines Elastomerabschnitts radial innen zur Zwischenhülse zu einem Elastomerabschnitt radial außen zur Zwischenhülse zueinander in dem fertiggestellten Buchsenlager verhindert ist, wobei jedoch kein Haftvermittler an der Zwischenhülse benötigt wird.

Auch werden bei dem erfindungsgemäßen Verfahren bei der Herstellung der Zwischenhülse keine ansonsten wiederaufzuarbeitende Produktionsreste erzeugt, die beispielsweise beim Herausstanzen von Ausnehmungen in der Zwischenhülse entstehen würden.

Weitere erfindungsgemäße Merkmale und Weiterbildungen der Erfindung sind in der allgemeinen Beschreibung, den Figuren und der Figurenbeschreibung angegeben.

In einer vorteilhaften Ausführungsform kann die Zwischenhülse einen axial nicht konstanten Durchmesser aufweisen zur Einstellung einer vorgegebenen Steifigkeit der elastomeren Buchsenlager in axialer und/oder radialer Richtung und damit zur Einstellung einer vorbestimmten Kennung der elastomeren Buchsenlager.

Bei der Durchführung des Schrittes des Umformens der Zwischenhülsenvorformen um eine Achse parallel zu deren Transversalerstreckung zur Erzeugung von Zwischenhülsen kann jeweils eine, z.B. eine zylinderartige, Hülse gebildet sein, die über ihre gesamte Längserstreckung geschlitzt ist, wobei der Schlitz durch die sich nach der Umformung gegenüberliegenden Längsstirnkanten des vom Zwischenhülsenvorformband abgelängten Abschnittes festgelegt ist. In einer Ausführungsform kann vorgesehen sein, die sich gegenüberliegenden Stirnkanten miteinander zu verbinden, insbesondere zu verschweißen, sodass in dieser Ausführungsform die Zwischenhülse keinen durchgehenden Längsschlitz aufweist.

In einer weiteren Ausführungsform kann die Zwischenhülse asymmetrisch bezüglich einer Rotation um deren Längsachse ausgebildet sein zur Erzeugung einer ungleichförmigen radialen Steifigkeit der Zwischenhülse. Durch eine vorbestimmte Formgebung der Zwischenhülse kann das Buchsenlager an vorgegebene Anwendungserfordernisse angepasst werden.

In einer anderen Ausführungsform kann die Zwischenhülse rotationssymmetrisch bezüglich einer Rotation um deren Längsachse ausgebildet sein, zur Erzeugung einer im Wesentlichen homogenen radialen Steifigkeit des mit der beschriebenen Zwischenhülse erzeugten Buchsenlagers.

Um beim Schneid-Reck-Schritt ein Reißen des Metallbands während des Reckens zu verhindern, kann es von Vorteil sein, dass die jeweiligen Schnitte vom Material des Metallbands vollständig umschlossen sind. Des Weiteren kann es von Vorteil sein, dass das die Schnitte umschließende Metallmaterial an keiner Stelle eine geringere transversale Erstreckung aufweist als 1/10 der transversalen Ausdehnung des Metallbands.

Bei der Durchführung des Schneid-Reck-Schrittes können die von dem zumindest einen Schnitt erzeugten gegenüberliegenden Schnittkanten unmittelbar nach Erzeugung des zumindest eines Schnittes und vor dem Recken zueinander beabstandet sein. Dabei kann der Abstand der durch einen Schnitt erzeugten gegenüberliegenden Schnittkanten je nach Ausführungsform und verwendeter Schneideinrichtung zwischen etwa 100 µm bis zu 500 µm betragen, in bestimmten Ausführungsformen bis zu 2 mm. Nach dem Recken kann der Abstand gegenüberliegender Schnittkanten eines Schnittes je nach Ausführungsform insbesondere zwischen etwa 1 mm und 10 mm betragen.

### Figurenbeschreibung

Im Folgenden wird die Erfindung durch das Beschreiben eines erfindungsgemäßen Herstellungsverfahrens für ein erfindungsgemäßes Buchsenlagers 8 unter Verwendung eines Zwischenhülsenvorformbandes 6 und einer aus diesem erzeugten Zwischenhülse 3 unter Bezugnahme auf die beiliegenden skizzenhaften Figuren erläutert, wobei
- Figur 1: einen Ausschnitt eines im Rahmen des erfindungsgemäßen Verfahrens gefertigten Zwischenhülsenvorformbands 6,
- Figur 2: eine Zwischenhülse 3, gefertigt aus einer, von dem Zwischenhülsenvorformband 6 der Figur 1 abgelängten Zwischenhülsenvorform,
- Figur 3: ein durch das erfindungsgemäße Verfahren unter Verwendung der in Figur 1 dargestellten Zwischenhülse 3 hergestelltes elastomeres Buchsenlager 8 in einem Längsschnitt,
zeigt.

Das erfindungsgemäße Verfahren wird im Folgenden mit Bezug auf die Herstellung einer Mehrzahl von elastomeren Buchsenlagern beschrieben, wie sie im Bereich von Radaufhängung von Kraftfahrzeugen eingesetzt werden. Ein solches Buchsenlager weist einen Innenkern, einen den Innenkern radial umschließenden Elastomerkörper sowie eine den Elastomerkörper radial umschließende Außenhülse auf. Zur Einstellung einer vorgegebenen Kennlinie des Buchsenlagers umfasst der Elastomerkörper eine in das Elastomermaterial eingebettete Zwischenhülse. In der Regel ist der Innenkern aus einem Metallmaterial oder einem Kunststoff hergestellt. Die Zwischenhülse ist bei der Umsetzung des erfindungsgemäßen Verfahrens aus einem Metallmaterial, beispielsweise Aluminium hergestellt. Die Außenhülse kann je nach Ausführungsform ein Kunststoffmaterial oder ein Metallmaterial aufweisen.

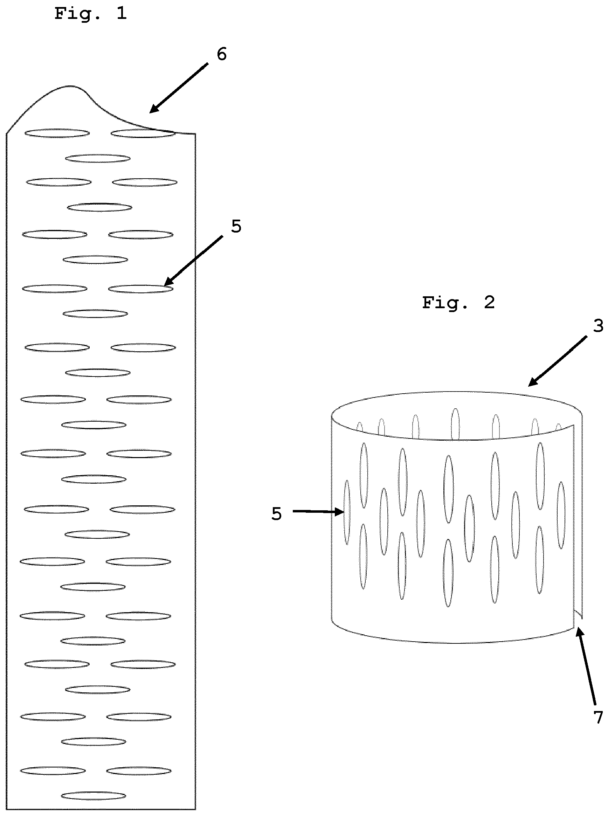

Die Herstellung des Zwischenhülsenvorformbändes 6 beim erfindungsgemäßen Verfahren zur Herstellung eines Buchsenlagers lässt eine Vielzahl verschiedener Schnittmuster bei der Durchführung des Schneid-Reck-Schritts zu, wobei die Schnitte durch Recken zu Lücken 5 des Zwischenhülsenvorformbands 6 gewalzt werden. In **Figur 1** ist eine mögliche Ausführungsform des im Rahmen der Erfindung hergestellten Zwischenhülsenvorformbands 6 in einem Ausschnitt einer Draufsicht gezeigt.

**Figur 2** zeigt eine Zwischenhülse 3, die durch Umformung einer von dem in Figur 1 gezeigten Zwischenhülsenvorformband 6 abgelängten Zwischenhülsenvorform hergestellt ist. Beim Umformen der Zwischenhülsenvorform zur Zwischenhülse 3 werden die freien Enden in dieser Ausführungsform nicht miteinander verbunden, sodass ein Zwischenhülsenspalt 7 vorliegt, der durch die Beabstandung der Längsenden der Zwischenhülsenvorform gebildet ist. Durch den Verzicht einer Verbindung der beiden Enden werden zum einen weitere Arbeitsschritte vermieden und zum anderen kann die Zwischenhülse 3 so flexibler in die Spritzgießform und somit beim Umspritzen leichter in den Elastomerkörper 2 eingebracht werden. Mit der Anzahl der Lücken 5 in der Zwischenhülse 3 lässt sich die Stärke des Formschlusses zwischen Elastomerkörper 2 und Zwischenhülse 3 sowie die radiale Steifigkeit des Elastomerkörpers und somit des elastomeren Buchsenlagers 8 einstellen. Je größer die Anzahl und Umfangsabmessung der Lücken 5 in der Zwischenhülse 3 ist, desto stärker ist der Formschluss zwischen Elastomerkörper 2 und Zwischenhülse 3 und umso geringer ist die radiale Kennung des Lagers und umgekehrt.

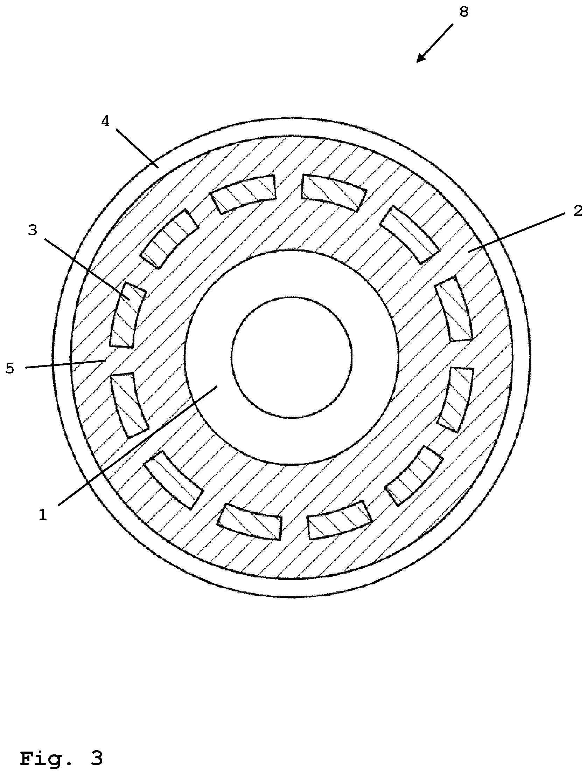

**Figur 3** zeigt ein mittels des erfindungsgemäßen Verfahrens und unter Nutzung der in **Figur 2** dargestellten Zwischenhülse 3 hergestelltes elastomeres Buchsenlager 8 in einer Schnittdarstellung senkrecht zur Längsachse. Das elastomere Buchsenlager 8 weist einen vom Elastomerkörper 2 radial umschlossene Innenkern 1 und eine den Elastomerkörper 2 umschließende Außenhülse 4 auf. Der Elastomerkörper 2 ist in der beschriebenen Ausführungsform sowohl an die Außenhülse 4 als auch an den Innenkern 1 anvulkanisiert. Die Zwischenhülse 3 ist im Elastomerkörper 2 vergossen, jedoch als Teil des Elastomerkörpers nicht stoffschlüssig mit dem Elastomermaterial verbunden. Stattdessen liegt über die Lücken 5 der Zwischenhülse 3 eine Einbettung der Zwischenhülse im Elastomermaterial vor, sodass eine relative Verschiebung der Zwischenhülse zum daran angrenzenden Elastomermaterial verhindert ist.

### Bezugszeichenliste

- 1: Innenkern
- 2: Elastomerkörper
- 3: Zwischenhülse
- 4: Außenhülse
- 5: Lücke
- 6: Zwischenhülsenvorformband
- 7: Zwischenhülsenspalt
- 8: Elastomeres Buchsenlager

## Patentansprüche

1. Verfahren zur Herstellung mehrerer elastomerer Buchsenlager (8) mit den Schritten:
- Bereitstellen einer Mehrzahl von Innenkernen (1);
- Bereitstellen einer Mehrzahl von Außenhülsen (4);
- Bereitstellen eines Zwischenhülsenvorformbandes (6) mit den Schritten:
o Bereitstellen eines Metallbands
o Abschnittsweises Einführen des Metallbands in eine Schneid-Reck-Vorrichtung;
o Durchführen eines Schneid-Reck-Schrittes im Bereich des eingeführten Abschnitts, welcher die Erzeugung zumindest eines transversalen Schnittes in das Metallband und nach erfolgtem Schnitt das Recken des Metallbands durch Walzen des eingeführten Abschnitts zur Vergrößerung eines Abstandes von sich gegenüberliegender Schnittkanten des Schnitts zur Erzeugung einer Lücke (5) umfasst;
∘ Durchführen eines Förderschrittes, welcher das Metallband in Longitudinalrichtung zu einem nachfolgenden Abschnitt des Metallbands fördert;
∘ Wiederholen des Schneid-Reck-Schrittes und des Förderschrittes, bis jeder Abschnitt des Metallbands entlang seiner gesamten Longitudinalerstreckung bearbeitet ist;
- Ablängen mehrerer Zwischenhülsenvorformen mit vorgegebener Longitudinalerstreckung vom Zwischenhülsenvorformband (6);
- Umformen der Zwischenhülsenvorformen um eine Achse parallel zu deren Transversalerstreckung zur Erzeugung von mehreren Zwischenhülsen (3);
- Bereitstellen zumindest einer Spritzgießform zum Umspritzen zumindest einer Zwischenhülse (3), eines Innenkerns (1) und einer Außenhülse (4) zur Erzeugung jeweils eines elastomeren Buchsenlagers (8);
- Fertigen mehrerer elastomerer Buchsenlager (8) jeweils mit den Schritten:
∘ Einsetzen eines Innenkerns (1) und einer Außenhülse (4) in die Spritzgießform;
∘ Einsetzen zumindest einer Zwischenhülse (3) in die Spritzgießform;
∘ Umspritzen der in der Spritzgießform befindlichen Teile mit einem Elastomer zur Erzeugung eines elastomeren Buchsenlagers (8), derart, dass das Elastomer zwischen beabstandeten Schnittkanten der Schnitte angeordnet ist zur Erzeugung einer Formschlussverbindung zwischen Elastomerkörper (2) und Zwischenhülse (3).

2. Verfahren zur Herstellung mehrerer elastomerer Buchsenlager (8) nach Anspruch 1, **dadurch gekennzeichnet, dass** die Zwischenhülsen (3) einen axial nicht konstanten Durchmesser aufweisen zur Einstellung einer vorgegebenen Steifigkeit der elastomeren Buchsenlager (8) in axialer und/oder radialer Richtung.

3. Verfahren zur Herstellung mehrerer elastomerer Buchsenlager (8) nach Anspruch 1 oder 2, **dadurch gekennzeichnet, dass** die Zwischenhülsen (3) asymmetrisch bezüglich Rotation um die Längsachse der Zwischenhülsen (3) geformt sind zur Erzeugung einer inhomogenen radialen Steifigkeit der elastomeren Buchsenlager (8).

4. Verfahren zur Herstellung mehrerer elastomerer Buchsenlager (8) nach Anspruch 1, **dadurch gekennzeichnet, dass** die Zwischenhülsen (3) rotationssymmetrisch bezüglich Rotation um die Längsachse der Zwischenhülsen (3) geformt sind zur Erzeugung einer konstanten radialen Steifigkeit der elastomeren Buchsenlager (8).

5. Verfahren zur Herstellung mehrerer elastomerer Buchsenlager (8) nach einem der vorangegangenen Ansprüche, **dadurch gekennzeichnet, dass** jeweilige Schnittkanten der Schnitte von dem Material des Metallbands vollständig umschlossen sind.

6. Verfahren zur Herstellung mehrerer elastomerer Buchsenlager (8) nach einem der vorangegangenen Ansprüche, **dadurch gekennzeichnet, dass** das die Schnitte umschließende Metallmaterial an keiner Stelle eine geringere transversale Erstreckung aufweist als 1/10 der transversalen Erstreckung des Metallbands, zur Erzeugung steifer Zwischenhülsen (3).

7. Verfahren zur Herstellung mehrerer elastomerer Buchsenlager (8) nach einem der vorangegangenen Ansprüche, **dadurch gekennzeichnet, dass** die durch die Schnitte erzeugten gegenüberliegenden Schnittkanten unmittelbar nach dem Schneiden und vor dem Recken zueinander beabstandet sind.

8. Elastomeres Buchsenlager (8), umfassend einen Innenkern (1), einen den Innenkern radial umschließenden Elastomerkörper (2), zumindest eine als Teil des Elastomerkörpers angeordnete Zwischenhülse (3) und eine den Elastomerkörper umgreifende Außenhülse (4), **dadurch gekennzeichnet, dass** das Buchsenlager nach einem Verfahren nach einem der vorstehenden Patentansprüche hergestellt ist.
